# NEUE EUROPÄISCHE PATENTSCHRIFT

(11) **EP 0 544 187 B2**
(45) Veröffentlichungstag und Bekanntmachung des Hinweises auf die Entscheidung über den Einspruch: **17.02.1999**
(45) Hinweis auf die Patenterteilung: 15.02.1995
(21) Anmeldenummer: 92119728.1
(22) Anmeldetag: 19.11.1992
(51) Int. Cl.: B23K 9/173

(54) **Schutzgas-Lichtbogen-Schweissverfahren mit speziellem Schutzgas**
Arc welding method using special protecting gas
Méthode de soudage à l'arc avec gaz de protection spéciaux

(30) Priorität: 26.11.1991 DE 4138835
(43) Veröffentlichungstag der Anmeldung: 02.06.1993
(73) Patentinhaber: Linde Aktiengesellschaft, 65189 Wiesbaden (DE)
(72) Erfinder: Geipl, Herbert, Dipl.-Ing., W-8038 Gröbenzell (DE)
(74) Vertreter: Schaefer, Gerhard, Dr.

(56) Entgegenhaltungen:
- DE-A- 1 465 027
- DE-A- 2 553 418
- FR-A- 2 551 377
- WELDING REVIEW INTERNATIONAL Bd. 11, Nr. 1, Februar 1992, REDHILL, SURREY, GB Seiten 17-20, XP000270868 R. Lahnsteiner "The T.I.M.E process-an innovative MAG welding process".
- SCANDINAVIAN JOURNAL OF METALLURGY 16(1987), pages 229-232, STENBACKA ET AL: "SHIELDING GAS-METAL ARC WELDING OF STAINS STEELS"
- "MIG-SVETSNING AV ROSTFRIA STAL, AGA AB, 1986

## Beschreibung

Die Erfindung betrifft ein Schutzgas-Lichtbogen-Schweißverfahren mit abschmelzender Elektrode für höher- und hochlegierte, korrosionsbeständige Stähle, insbesondere Nickelwerkstoffe und Sonderstähle, bei dem ein Schutzgas-Gasstrom kontinuierlich benachbart zur Elektrode der Schweißstelle zugeführt wird, wobei das Schutzgas zu einem überwiegenden Haupteil aus Argon oder einem Argon-Helium- Gemisch besteht, dem niedrige Anteile von Kohlendioxid und/oder Sauerstoff beigefügt sind.

Schutzgase, welche die eben genannten Gaskomponenten, also Argon, Helium, Kohlendioxid und Sauerstoff, enthalten sind beispielsweise aus der DE-A-3432087 bekannt, wobei bei diesen Schutzgasgemischen insbesondere sehr niedrige Anteile CO₂ und Sauerstoff, nämlich 2.5 bis 8 % CO₂ zusammen mit 0.1 bis 0.8 % O₂, vorgeschlagen sind. Kohlendioxid und Sauerstoff bewirken ein häufig erwünschtes Oxidationspotential des Schutzgases und besitzen zudem einen stabilisierenden Effekt auf dem Lichtbogen, der in vielen kritischen Schweiß situationen äußerst vorteilhaft, manchmal sogar unverzichtbar ist.

Aus der nicht vorveröffentlichten EP-A-0494521 [zu berücksichtigen gemäß Artikel 54 (3) EPÜ in Verbindung mit Artikel 54 (4) EPÜ] ist für die Vertragsstaaten BE, DE, ES, FR, GB, IT und NL ein Verfahren zum Gasmetallschmelzen von speziellen Metallen wie Superlegierungen auf Nickel- und Cobalt-Basis bekannt, bei dem ein Schutzgas aus Argon, Helium und Kohlendioxid mit 5 bis 13 % (vorzugsweise 8 bis 12 %) He, 0.1 bis 0.9 % (vorzugsweise 0.25 bis 0.75 %) CO₂ und Rest Argon plus Verunreinigungen verwendet wird.

In der JP-B-61-14916 ist ein MIG-Lichtbogenschweißverfahren von Nickelwerkstoffen mit Drähten einer Al, Ti und Nb enthaltenden Nickellegierung beschrieben, bei dem ein Schutzgas aus Argon und 0.5 bis 10 % CO₂, 0.3 bis 5 % O₂ oder 0.3 bis 7 % eines O₂/CO₂-Gemisches eingesetzt wird. In Vergleichversuchen wurden unter anderem auch Schutzgasgemische aus Argon und 0.3 % CO₂ und aus Argon und 0.1 % O₂ verwendet, was allerdings zu einer unbefriedigenden Lichtbogenstabilität bei geringer Oxidation und zu Schweißdefekten führte.

Aus der EP-A-0442475 und der korrespondierenden US-A-4973822 ist ein Verfahren zum Gasmetalllichtbogenschweißen von rostfreiem Stahl mit abschmelzender Elektrode unter Einsatz eines Schutzgases aus 0.5 bis 1.25% (vorzugsweise 0.6 bis 0.95%) CO₂, 30 bis 40% (vorzugsweise 32 bis 38%) Helium und Rest Argon bekannt.

Die DE-A-3432087 beschreibt ein Metall-Lichtbogen-Schweißverfahren mit abschmelzender Elektrode unter Verwendung eines Gasstromes aus einem Argon/ Helium-Gemisch als Hauptteil mit einem Anteil von 25 bis 60 Vol% He und aus einem O₂/CO₂-Gemisch mit Anteilen von 2.5 bis 8.5 Vol% CO₂ und 0.1 bis 0.8 Vol% O₂.

Aus der US-A-4463243 ist ein elektrisches Plasmalichtbogen-Schweißverfahren mit abschmelzender Elektrode für rostfreien Stahl bekannt, bei dem ein Gasgemisch eingesetzt wird, das im wesentlichen aus 41.65 % Argon, 55.00 % Helium, 3.20 % Kohlendioxid und 0.14 % Sauerstoff besteht.

Die EP-A-0207019 beschreibt ein Gas-Metall-Lichtbogen-Schweißverfahren für rostfreien Stahl unter Einsatz eines Schutzgasgemisches aus Argon, Helium und Sauerstoff mit Anteilen von 0.5 bis 1.5 % (vorzugsweise 0.9 bis 1.1 %) O₂ und von 25 bis 40 % (vorzugsweise 28.5 bis 33 %) He und Rest Argon.

Beim Schweißen der eingangs genannten, korrosionsbeständigen Werkstoffe, z.B. einem Chrom/Nickel-Stahl mit 18 % Chrom- und 10 % Nickelanteil, mit derartigen Schutzgasen wird nun die die Korrosionbeständigkeit bewirkende Chromoxid-Oberflächenschicht beim und auf dem Schweißgut zerstört und eine nicht korrosionsfeste Oxidschicht erzeugt. Diese unerwünschte Oxidschicht wurde oder mußte bei höheren Qualitätsansprüchen bislang in einem nachfolgenden Prozeßschritt beispielsweise durch Abbeizen mit einem sauren Beizmittel oder durch Abstrahlen mit abrasiven Teilchen entfernt werden. Andrerseits war der Verzicht auf die lichtbogenstabilisierenden Gaskomponenten denkbar, welches jedoch zu einem unbefriedigenden Schweißablauf und Schweißergebnis führte.

Die Aufgabenstellung der Erfindung bestand daher darin, das Schweißverbinden der besagten korrosionsbeständigen Werkstoffe mit der Schutzgas-Lichtbogen-Schweißmethode so zu gestalten, daß keine unerwünschte Oxidation auftritt und gleichzeitig dabei ein guter Schweißvorgang, insbesondere auch mit stabilem Lichtbogen, erhalten bleibt.

Diese Aufgabe wird erfindungsgemäß dadurch gelöst, daß ein im wesentlichen aus Argon und/oder Helium bestehendes Schutzgas mit einem Kohlendioxidanteil, einem Sauerstoffanteil oder einem Anteil aus einem Gemisch dieser beiden Gase jeweils in einem wie in Anspruch 1 angegebenen Bereich verwendet wird.

Überraschenderweise wird mit einem derart geringe Anteile von CO₂ und/oder O₂ enthaltenden Schutzgas beim Schweißen der erfindungsgemäß relevanten Werkstoffe noch ein guter Schweißablauf mit stabilem Lichtbogen erhalten. Darüber hinaus ergibt sich durch die geringen Anteile des Sauerstoffträgers CO₂ oder des Sauerstoffs selbst keine wie eingangs beschriebene Oxidschichtbildung und es kann der bislang erforderliche Nacharbeitungsschritt zur Wiederherstellung der Korrosionsfestigkeit in der Regel entfallen. In jedem Fall tritt jedoch eine erheblich verminderte Oxidschichtbildung auf, die die Nachbearbeitung wesentlich vereinfacht.

Besonders vorteilhaft sind im weiteren Schutzgasgemische mit besagten CO₂ bzw. O₂-Anteilen und mit einem Argonanteil von 99.09 bis 10 Vol%, vorzugsweise 50 bis 14.09 Vol%, zusammen mit einem dem Rest zu 100% entsprechenden Heliumanteil.

Eine einfache und problemlose Schutzgasversorgung ergibt sich, wenn das Schutzgas als Fertiggemisch geliefert und bereitgestellt wird.

Eine andere Variante der Erfindung, die bei variierenden Betriebsbedingungen oder dem Wunsch nach unterschiedlichen Einstellmöglichkeiten besonders vorteilhaft ist, ergibt sich, wenn das Schutzgas an Ort und Stelle des Einsatzes aus zwei oder mehr Ausgangsgasen oder -gasmischungen gemischt wird.

Eine besonders vorteilhafte Ausführung der Erfindung wird ferner dann erhalten, wenn durch geeignete Schutzgaszuleitung, z.B. durch eine spezielle Schutzgasdüse oder eine eigene Schutzgasleitung, die Schutzgasabdeckung der Schweißnaht nach dem Schweißen und während der Abkühlung derselben bis zur kritischen Temperatur aufrechterhalten wird.

Im folgenden wird das erfindungsgemäße Verfahren anhand eines Beispiels näher erläutert:

Es sind Nickel/Molybdän-Stahlteile mit 40 mm Stärke zu verschweißen. Hierzu wird mit Vorteil das MAG-(Metall Aktivgas-)Schweißverfahren mit Lichtbogen zwischen abschmelzender, artgleicher Elektrode und Werkstück im Impulsbetrieb angewandt. Erfindungsgemäß sind dabei insbesondere Schutzgasmischungen in Zusammensetzungen
von Ar: 40-20 % / He: 60-80 % / CO₂: 0.03-0.08 % oder Zusammensetzungen
von Ar: 40-20 % / He: 60-80 % / O₂:0.02-0.05 %
besonders vorteilhaft.

Mit einem Drahtvorschub von ca. 4.5 m/min, einer Impulsfrequenz 106 Hz, einer Pulsspannung von 34.5 V und einer Pulszeit von 2.0 ms wird ein guter Schweißablauf mit stabilem Lichtbogen und geringer Spritzerbildung erhalten, der zu einer sauberen Schweißnaht führt, die aufgrund des nur minimal vorhandenen Sauerstoffs nur eine geringfügige Oxidation und eine hohe Korrosionsbeständigkeit aufweist.

Das erfindungsgemäße Verfahren ist dabei nicht auf diese speziellen Verfahrensparameter beschränkt, sondern ist im allgemeinen beim MAG-Schweißen der oben benannten Werkstoffgruppen mit Vorteilen verbunden.

Es ergibt sich also mit dem erfindungsgemäßen Verfahren und zugehörigen Schutzgasen mit den besagten, niedrigen CO₂- und/oder O₂-Anteilen in überraschender Weise ein günstig verlaufender Schweißprozeß mit einem guten und vorteilhaften Schweißergebnis.

## Patentansprüche (Patentansprüche für folgende(n) Vertragsstaat(en): AT, CH, LI, PT)

1. Schutzgas-Lichtbogen-Schweißverfahren mit abschmelzender Elektrode für höher- und hochlegierte, korrosionsbeständige Stähle, insbesondere Nickelwerkstoffe und Sonderstähle,
bei dem ein Schutzgas-Gasstrom kontinuierlich benachbart zur Elektrode der Schweißstelle zugeführt wird,
wobei das Schutzgas zu einem überwiegenden Haupteil aus Argon oder einem Argon-Helium-Gemisch besteht, dem niedrige Anteile von Kohlendioxid und/oder Sauerstoff beigefügt sind,
**dadurch gekennzeichnet**, daß
- ein Kohlendioxidanteil von 0.01 bis 0.1 Vol%, vorzugsweise 0.02 bis 0.1 Vol%, oder
- ein Sauerstoffanteil von 0.02 bis 0.05 Vol% oder
- ein Anteil aus einem Gemisch von Sauerstoff und Kohlendioxid von 0.01 bis 0.1 Vol%, vorzugsweise 0.02 bis 0.1 Vol%,
im Schutzgas verwendet wird.

2. Schutzgas-Lichtbogen-Schweißverfahren nach Anspruch 1,
**dadurch gekennzeichnet**, daß ein entsprechend O₂- und/oder CO₂- haltiges Schutzgas mit einem Argonanteil von 99.09 bis 10 Vol%, vorzugsweise 50 bis 14.09 Vol%, zusammen mit einem dem Rest zu 100% entsprechenden Heliumanteil verwendet wird.

3. Schutzgas-Lichtbogen-Schweißverfahren nach einem der Ansprüche 1 oder 2, **dadurch gekennzeichnet**, daß das Schutzgas als Fertiggemisch geliefert und bereitgestellt wird.

4. Schutzgas-Lichtbogen-Schweißvertahren nach einem der Ansprüche 1 oder 2, **dadurch gekennzeichnet**, daß das Schutzgas an Ort und Stelle des Einsatzes aus zwei oder mehr Ausgangsgasen oder Ausgangsgasmischungen gemischt wird.

5. Schutzgas-Lichtbogen-Schweißverfahren nach einem der Ansprüche 1 bis 4, **dadurch gekennzeichnet**, daß durch geeignete Schutzgaszuleitung, z.B. durch eine spezielle Schutzgasdüse oder eine eigene Schutzgasleitung, die Schutzgasabdeckung der Schweißnaht nach dem Schweißvorgang während ihrer Abkühlung bis zur kritischen Temperatur aufrechterhalten wird.

## Patentansprüche (Patentansprüche für folgende(n) Vertragsstaat(en): BE, DE, ES, FR, GB, IT, NL)

1. Schutzgas-Lichtbogen-Schweißverfahren mit abschmelzender Elektrode für höher- und hochlegierte, korrosionsbeständige Stähle, insbesondere Nickelwerkstoffe und Sonderstähle,
bei dem ein Schutzgas-Gasstrom kontinuierlich benachbart zur Elektrode der Schweißstelle zugeführt wird,
wobei das Schutzgas zu einem überwiegenden Haupteil aus Argon oder einem Argon-Helium-Gemisch besteht, dem niedrige Anteile von Kohlendioxid und/oder Sauerstoff beigefügt sind,
**dadurch gekennzeichnet**, daß
- ein Kohlendioxidanteil von 0.01 bis 0.1 Vol%, vorzugsweise 0.02 bis 0.1 Vol%, wobei ein Kohlendioxidanteil von 0.1 Vol% ausgenommen ist, oder
- ein Sauerstoffanteil von 0.02 bis 0.05 Vol% oder
- ein Anteil aus einem Gemisch von Sauerstoff und Kohlendioxid von 0.01 bis 0.1 Vol%, vorzugsweise 0.02 bis 0.1 Vol%,
im Schutzgas verwendet wird.

2. Schutzgas-Lichtbogen-Schweißverfahren nach Anspruch 1,
**dadurch gekennzeichnet**, daß ein entsprechend O₂- und/oder CO₂- haltiges Schutzgas mit einem Argonanteil von 99.09 bis 10 Vol%, vorzugsweise 50 bis 14.09 Vol%, zusammen mit einem dem Rest zu 100% entsprechenden Heliumanteil verwendet wird.

3. Schutzgas-Lichtbogen-Schweißverfahren nach einem der Ansprüche 1 oder 2, **dadurch gekennzeichnet**, daß das Schutzgas als Fertiggemisch geliefert und bereitgestellt wird.

4. Schutzgas-Lichtbogen-Schweißverfahren nach einem der Ansprüche 1 oder 2, **dadurch gekennzeichnet**, daß das Schutzgas an Ort und Stelle des Einsatzes aus zwei oder mehr Ausgangsgasen oder Ausgangsgasmischungen gemischt wird.

5. Schutzgas-Lichtbogen-Schweißverfahren nach einem der Ansprüche 1 bis 4, **dadurch gekennzeichnet**, daß durch geeignete Schutzgaszuleitung, z.B. durch eine spezielle Schutzgasdüse oder eine eigene Schutzgasleitung, die Schutzgasabdeckung der Schweißnaht nach dem Schweißvorgang während ihrer Abkühlung bis zur kritischen Temperatur aufrechterhalten wird.

## Claims (Claims for the following Contracting State(s): AT, CH, LI, PT)

1. Gas-shielded arc-welding process with fusing electrode for higher-alloy and high-alloy, corrosion-resistant steels, in particular nickel materials and special steels, in which a stream of shielding gas is continuously delivered to the weld adjacent to the electrode, the shielding gas consisting predominantly of argon or of an argon and helium mixture to which low proportions of carbon dioxide and/or oxygen are added, characterised in that
- a carbon dioxide proportion of 0.01 to 0.1% by volume, preferably 0.02 to 0.1% by volume, or
- an oxygen proportion of 0.02 to 0.05% by volume or
- a proportion of a mixture of oxygen and carbon dioxide of 0.01 to 0.1% by volume, preferably 0.02 to 0.1% by volume,
is used in the shielding gas.

2. Gas-shielded arc-welding process according to claim 1, characterised in that a shielding gas containing O₂ and/or CO₂ accordingly is used with an argon proportion of 99.09 to 10% by volume, preferably 50 to 14.09% by volume, together with a helium proportion corresponding to 100% of the remainder.

3. Gas-shielded arc-welding process according to one of claims 1 or 2, characterised in that the shielding gas is supplied and delivered ready-mixed.

4. Gas-shielded arc-welding process according to one of claims 1 or 2, characterised in that the shielding gas is mixed at the point of use from two or more starting gases or starting gas mixtures.

5. Gas-shielded arc-welding process according to one of claims 1 to 4, characterised in that the shielding gas covering of the weld seam is maintained after the welding operation during its cooling to the critical temperature by appropriate delivery of shielding gas, e.g. through a special shielding gas nozzle or a special shielding gas line.

## Claims (Claims for the following Contracting State(s): BE, DE, ES, FR, GB, IT, NL)

1. Gas-shielded arc-welding process with fusing electrode for higher-alloy and high-alloy, corrosion-resistant steels, in particular nickel materials and special steels, in which a stream of shielding gas is continuously delivered to the weld adjacent to the electrode, the shielding gas consisting predominantly of argon or of an argon and helium mixture to which low proportions of carbon dioxide and/or oxygen are added, characterised in that
- a carbon dioxide proportion of 0.01 to 0.1% by volume, preferably 0.02 to 0.1% by volume, excepting a carbon dioxide proportion of 0.1% by volume, or
- an oxygen proportion of 0.02 to 0.05% by volume or
- a proportion of a mixture of oxygen and carbon dioxide of 0.01 to 0.1% by volume, preferably 0.02 to 0.1% by volume,
is used in the shielding gas.

2. Gas-shielded arc-welding process according to claim 1, characterised in that a shielding gas containing O₂ and/or CO₂ accordingly is used with an argon proportion of 99.09 to 10% by volume, preferably 50 to 14.09% by volume, together with a helium proportion corresponding to 100% of the remainder.

3. Gas-shielded arc-welding process according to one of claims 1 or 2, characterised in that the shielding gas is supplied and delivered ready-mixed.

4. Gas-shielded arc-welding process according to one of claims 1 or 2, characterised in that the shielding gas is mixed at the point of use from two or more starting gases or starting gas mixtures.

5. Gas-shielded arc-welding process according to one of claims 1 to 4, characterised in that the shielding gas covering of the weld seam is maintained after the welding operation during its cooling to the critical temperature by appropriate delivery of shielding gas, e.g. through a special shielding gas nozzle or a special shielding gas line.

## Revendications (Revendications pour l'(les) Etat(s) contractant(s) suivant(s): AT, CH, LI, PT)

1. Procédé de soudage à l'arc sous gaz de protection avec électrode fusible pour des aciers fortement et très fortement alliés et résistants à la corrosion, en particulier pour des matériaux à base de nickel et des aciers spéciaux, dans lequel un courant de gaz de protection et de gaz est amené en continu au voisinage de l'électrode, à l'emplacement de la soudure, le gaz de protection se compose pour une partie principale déterminante d'argon ou d'un mélange argon-hélium, à laquelle sont ajoutés pour une faible partie du gaz carbonique et/ou de l'oxygène, caractérisé en ce qu'on utilise
- un pourcentage de gaz carbonique de 0,01 à 0,1 % en volume, de préférence de 0,02 à 0,1 % en volume ou
- un pourcentage d'oxygène de 0,02 à 0,05 % en volume, ou
- un pourcentage d'un mélange d'oxygène et de gaz carbonique de 0,01 à 0,1% en volume, de préférence de 0,02 à 0,1% en volume,
dans le gaz de protection.

2. Procédé de soudage à l'arc sous gaz de protection selon la revendication 1, caractérisé en ce qu'on utilise un gaz de protection correspondant contenant O₂ et/ou CO₂ avec une teneur en argon de 99,09 à 10% en volume, de préférence de 50 à 14,09% en volume, en même temps qu'un pourcentage d'hélium correspondant au pourcentage manquant pour atteindre 100%.

3. Procédé de soudage à l'arc sous gaz de protection selon l'une des revendications 1 ou 2, caractérisé en ce que le gaz de protection est fourni et préparé sous la forme d'un mélange prêt à l'emploi.

4. Procédé de soudage à l'arc sous gaz de protection selon l'une des revendications 1 ou 2, caractérisé en ce que le gaz de protection est préparé au lieu et à l'emplacement d'utilisation à partir de deux ou plusieurs gaz de départ ou mélanges de gaz de départ.

5. Procédé de soudage à l'arc sous gaz de protection selon l'une des revendications 1 à 4, caractérisé en ce que, grâce à une amenée appropriée de gaz de protection, par exemple par une buse spéciale de gaz de protection ou une conduite individuelle de gaz de protection, on maintient la couverture en gaz de protection du cordon de soudure après le processus de soudage, pendant le refroidissement du cordon jusqu'à la température critique.

## Revendications (Revendications pour l'(les) Etat(s) contractant(s) suivant(s): BE, DE, ES, FR, GB, IT, NL)

1. Procédé de soudage à l'arc sous gaz de protection avec électrode fusible pour des aciers fortement et très fortement alliés et résistants à la corrosion, en particulier pour des matériaux à base de nickel et des aciers spéciaux, dans lequel un courant de gaz de protection et de gaz est amené en continu au voisinage de l'électrode, à l'emplacement de la soudure, le gaz de protection se compose pour une partie principale déterminante d'argon ou d'un mélange argon-hélium, à laquelle sont ajoutés pour une faible partie du gaz carbonique et/ou de l'oxygène, caractérisé en ce qu'on utilise
- un pourcentage de gaz carbonique de 0,01 à 0,1 % en volume, de préférence de 0,02 à 0,1 % en volume, un pourcentage de gaz carbonique de 0,1 % en volume étant exclus, ou
- un pourcentage d'oxygène de 0,02 à 0,05 % en volume, ou
- un pourcentage d'un mélange d'oxygène et de gaz carbonique de 0,01 à 0,1% en volume, de préférence de 0,02 à 0,1% en volume,
dans le gaz de protection.

2. Procédé de soudage à l'arc sous gaz de protection selon la revendication 1, caractérisé en ce qu'on utilise un gaz de protection correspondant contenant O₂ et/ou CO₂ avec une teneur en argon de 99,09 à 10% en volume, de préférence de 50 à 14,09% en volume, en même temps qu'un pourcentage d'hélium correspondant au pourcentage manquant pour atteindre 100%.

3. Procédé de soudage à l'arc sous gaz de protection selon l'une des revendications 1 ou 2, caractérisé en ce que le gaz de protection est fourni et préparé sous la forme d'un mélange prêt à l'emploi.

4. Procédé de soudage à l'arc sous gaz de protection selon l'une des revendications 1 ou 2, caractérisé en ce que le gaz de protection est préparé au lieu et à l'emplacement d'utilisation à partir de deux ou plusieurs gaz de départ ou mélanges de gaz de départ.

5. Procédé de soudage à l'arc sous gaz de protection selon l'une des revendications 1 à 4, caractérisé en ce que, grâce à une amenée appropriée de gaz de protection, par exemple par une buse spéciale de gaz de protection ou une conduite individuelle de gaz de protection, on maintient la couverture en gaz de protection du cordon de soudure après le processus de soudage, pendant le refroidissement du cordon jusqu'à la température critique.
